(19) Europäisches Patentamt
European Patent Office
Office européen des brevets

(11) **EP 3 888 866 B1**

(12) **EUROPEAN PATENT SPECIFICATION**

(45) Date of publication and mention
of the grant of the patent:
**27.12.2023   Bulletin 2023/52**

(21) Application number: **19889469.3**

(22) Date of filing: **27.11.2019**

(51) International Patent Classification (IPC):
**B29C 70/42** *(2006.01)*       **B29K 105/08** *(2006.01)*

(52) Cooperative Patent Classification (CPC):
**D03D 15/275; B29C 43/003; B29C 43/34;
B29C 70/22; B29C 70/46; D03D 1/00;**
B29K 2995/0026; B29L 2031/3005; B29L 2031/722;
D10B 2505/02

(86) International application number:
**PCT/JP2019/046271**

(87) International publication number:
**WO 2020/111091 (04.06.2020 Gazette 2020/23)**

(54) **CLOTH PREPREG, METHOD FOR MANUFACTURING CLOTH PREPREG, FIBER REINFORCED RESIN MOLDED ARTICLE, AND METHOD FOR MANUFACTURING FIBER REINFORCED RESIN MOLDED ARTICLE**

GEWEBE-PREPREG, VERFAHREN ZUR HERSTELLUNG VON GEWEBE-PREPREG, FASERVERSTÄRKTER HARZFORMGEGENSTAND UND VERFAHREN ZUR HERSTELLUNG EINES FASERVERSTÄRKTEN HARZFORMTEILS

PRÉIMPRÉGNÉ DE TISSU, PROCÉDÉ DE FABRICATION DE PRÉIMPRÉGNÉ DE TISSU, ARTICLE MOULÉ EN RÉSINE RENFORCÉE PAR DES FIBRES, ET PROCÉDÉ DE FABRICATION D'UN ARTICLE MOULÉ EN RÉSINE RENFORCÉE PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2018   JP 2018222750**

(43) Date of publication of application:
**06.10.2021   Bulletin 2021/40**

(73) Proprietor: **Mitsubishi Chemical Corporation
Chiyoda-ku
Tokyo 100-8251 (JP)**

(72) Inventor: **IKEDA, Kazuhisa
Tokyo 100-8251 (JP)**

(74) Representative: **Hoffmann Eitle
Patent- und Rechtsanwälte PartmbB
Arabellastraße 30
81925 München (DE)**

(56) References cited:
EP-A1- 3 095 577       WO-A1-2009/008312
WO-A1-2018/101245       WO-A1-2018/101245
JP-A- H08 232 135       JP-A- 2002 284 901
JP-A- 2007 314 926       JP-A- 2016 179 667
JP-A- 2016 522 305

**Description**

[Technical Field]

The present invention relates to a cloth prepreg, a method for manufacturing a cloth prepreg, a fiber reinforced resin molded article, and a method for manufacturing a fiber reinforced resin molded article.

[Background Art]

In recent years, fiber reinforced resins have been actively adopted as materials for sporting goods, automobiles, aircraft, industrial equipment, and the like. In particular, carbon fiber reinforced resins have been used in fields where light weight and high mechanical properties are required. For example, in the field of automobiles, carbon fiber reinforced resins have been applied to parts such as roofs, hoods, and trunk lids.

As a method for manufacturing a fiber reinforced resin molded article, a method of laminating a plurality of prepregs and compression molding the laminate is known (Patent Document 1). A prepreg is a molding material obtained by impregnating a fibrous reinforcing material such as carbon fiber and glass fiber with a matrix resin. Prepregs include a unidirectional prepreg (UD prepreg), in which the direction of the reinforcing fibers is unidirectional, and a cloth prepreg, in which a woven fabric woven from a reinforcing fiber bundle is impregnated with a matrix resin.

Patent Document 2 relates to a coated fiber-reinforced resin molded article and a process for producing the same. The manufacturing method comprises a first molding process that cures a matrix resin which a reinforcing fiber is impregnated with at a temperature T1 to obtain a fiber-reinforced resin molded article; and a second molding process that places the fiber-reinforced resin molded article in a cavity of a mold, sets the cavity to a temperature T2 that is lower than the temperature T1, injects a liquid coating layer-forming resin material into the cavity such as to coat at least part of a surface layer of the fiber-reinforced resin molded article, and cures the coating layer-forming resin material at the temperature T2, so as to obtain the coated fiber-reinforced resin molded article.

[Citation List]

[Patent Document]

[Patent Document 1]
PCT International Publication No. WO2017/007012

[Patent Document 2]
EP 3 095 577 A1

[Summary of Invention]

[Technical Problem]

Some fiber reinforced resin molded articles manufactured from cloth prepregs have a texture that can be seen through from the surface, in order to take advantage of the aesthetic appearance of the texture of the woven fabric formed of reinforcing fiber bundles. The manufacturing of such a fiber reinforced resin molded article has so far been carried out by molding a cloth prepreg at a low pressure of less than 1 MPa using an autoclave. However, since this method requires a long time for molding, it is not suitable for industrial manufacturing of parts requiring high productivity, such as automobile parts.

Therefore, the present inventors have attempted to manufacture a molded article in which the texture of the woven fabric formed of reinforcing fiber bundles can be seen through by a compression molding method, which has a short molding cycle and is advantageous for industrial mass production. However, it has been found that the compression molded article has many defective portions that look different in color nuance from their surroundings, and these defective portions impair the aesthetic appearance made by the texture of the woven fabric.

One object of the present invention is to provide a cloth prepreg for a fiber reinforced resin molded article having a surface through which a texture of a woven fabric formed of reinforcing fiber bundles is visible, and from which a molded article having an improved appearance in a case of being compression molded is obtained; and provide a method for manufacturing the cloth prepreg.

Another object of the present invention is to provide a fiber reinforced resin molded article having a surface through which a texture of a woven fabric formed of reinforcing fiber bundles is visible, and having improved industrial producibility and an improved appearance; and provide a method for manufacturing the molded article.

[Solution to Problem]

The present invention has the following aspects.

[1] A cloth prepreg which has a surface through which a texture of a woven fabric made of reinforcing fiber bundles as a warp and a weft is visible,

in which a loosening rate of weft, which is determined by a method defined as below, is 0.0% to 0.2%.
(method of obtaining loosening rate of weft)
a square fragment having two sides parallel to the warp and two sides perpendicular to the warp is cut out from the cloth prepreg, and the loosening rate of weft is obtained from lengths of the warp and weft taken out from the fragment by the following formula (I),

$$\text{loosening rate of weft} = \{(\text{length of the weft} - \text{length of the warp}) / \text{length of the warp}\} \times 100 \qquad (I).$$

[2] The cloth prepreg according to [1],
in which the loosening rate of weft is 0.1% or less, 0.05% or less, or 0.01% or less.
[3] The cloth prepreg according to [1] or [2],
in which the reinforcing fiber bundle is a carbon fiber bundle.
[4] The cloth prepreg according to [3],
in which a fiber basis weight of the woven fabric is 240 g/m$^2$ or more.
[5] A method for manufacturing the cloth prepreg according to any one of [1] to [4], the method including:

preparing a starting cloth prepreg which includes the woven fabric made of reinforcing fiber bundles as a warp and a weft; and
stretching the starting cloth prepreg by pulling in a weft direction.

[6] The manufacturing method according to [5],
in which the loosening rate of weft in the starting cloth prepreg is more than 0.2%.
[7] A method for manufacturing a fiber reinforced resin molded article, including:

compression molding the cloth prepreg according to any one of [1] to [4], or a prepreg laminate having one or more cloth prepregs according to any one of [1] to [4]; and
obtaining a compression molded article having a surface through which a texture of a woven fabric is visible.

[8] A method for manufacturing a fiber reinforced resin molded article, including:

compression molding a cloth prepreg or a prepreg laminate having one or more cloth prepregs to obtain a compression molded article,
in which the cloth prepreg has a surface through which a texture of a woven fabric made of reinforcing fiber bundles formed of carbon fiber as a warp and a weft is visible,
a fiber basis weight of the woven fabric is 240 g/m$^2$ or more, and
the compression molded article has a surface through which the texture of the woven fabric is visible.

[9] The manufacturing method according to [8],

in which a loosening rate of weft in the cloth prepreg, which is determined as follows, is 0.0% to 0.2%,
(method of obtaining loosening rate of weft)
a square fragment having two sides parallel to the warp and two sides perpendicular to the warp is cut out from the cloth prepreg, and the loosening rate of weft is obtained from lengths of the warp and weft taken out from the fragment by the following formula (I),

$$\text{loosening rate of weft} = \{(\text{length of weft - length of warp}) / \text{length of warp}\} \times 100 \quad (I).$$

[10] The manufacturing method according to [9],
in which the loosening rate of weft in the cloth prepreg is 0.1% or less, 0.05% or less, or 0.01% or less.
[11] The manufacturing method according to any one of [7] to [10],
in which the prepreg laminate further has, as an outermost layer, a resin film layer on at least one surface.
[12] The manufacturing method according to any one of [7] to [11],
in which the prepreg laminate has a foamed core layer stacked with the cloth prepreg.
[13] The manufacturing method according to any one of [7] to [12],
in which, a mold a resin flow percentage of which is set to be 0.0% to 0.5% by narrowing a clearance of a share edge is used for the compression molding.
[14] A fiber reinforced resin molded article which is a compression molded article, including:

a fiber reinforced resin layer including a woven fabric made of reinforcing fiber bundles as a warp and a weft,
in which the fiber reinforced resin molded article has a surface through which a texture of the woven fabric is visible, and
the surface has a 30 cm × 30 cm square region where a maximum value of a fiber meandering angle of the weft in the region is 12 degrees or less.

[15] A fiber reinforced resin molded article which is a compression molded article, including:

a fiber reinforced resin layer including a woven fabric made of reinforcing fiber bundles as a warp and a weft,
in which the fiber reinforced resin molded article has a surface through which a texture of the woven fabric is visible, and
the surface has a 30 cm × 30 cm square region where a maximum value of a fiber meandering angle of the weft in the region is 10 degrees or less.

[16] A fiber reinforced resin molded article which is a compression molded article, including:

a fiber reinforced resin layer including a woven fabric made of reinforcing fiber bundles as a warp and a weft,
in which the fiber reinforced resin molded article has a surface through which a texture of the woven fabric is visible, and
the surface has a 30 cm × 30 cm square region where there is no defective portion that always looks different in color nuance from its surroundings when observed under fluorescent lighting.

[17] A fiber reinforced resin molded article which is a compression molded article, including:

a fiber reinforced resin layer including a woven fabric made of reinforcing fiber bundles as a warp and a weft,
in which the fiber reinforced resin molded article has a surface through which a texture of the woven fabric is visible, and
the surface has a 30 cm × 30 cm square region where there is no defective portion that always looks different in color nuance from its surroundings when observed under sunlight.

[18] A fiber reinforced resin molded article which is a compression molded article, including:

a fiber reinforced resin layer including a woven fabric made of reinforcing fiber bundles as a warp and a weft,
in which the fiber reinforced resin molded article has a surface with an area of 100 cm$^2$ or more and less than 900 cm$^2$, through which a texture of the woven fabric is visible, and
a maximum value of a fiber meandering angle of the weft in the surface is 12 degrees or less.

[19] The fiber reinforced resin molded article according to [18],
in which the maximum value of the fiber meandering angle of the weft in the surface is 10 degrees or less.
[20] A fiber reinforced resin molded article which is a compression molded article, including:

a fiber reinforced resin layer including a woven fabric made of reinforcing fiber bundles as a warp and a weft,

in which the fiber reinforced resin molded article has a surface with an area of 100 cm² or more and less than 900 cm², through which a texture of the woven fabric is visible, and
the surface does not have a defective portion that always looks different in color nuance from its surroundings when observed under fluorescent lighting.

[21] The fiber reinforced resin molded article according to [20],
in which the surface does not have a defective portion that always looks different in color nuance from its surroundings when observed under sunlight.
[22] The fiber reinforced resin molded article according to any one of [14] to [21], further including:
a resin film layer stacked with the fiber reinforced resin layer.
[23] The fiber reinforced resin molded article according to any one of [14] to [22], further including:
a foamed core layer stacked with the fiber reinforced resin layer.
[24] The fiber reinforced resin molded article according to any one of [14] to [23], which is an automobile part.
[25] A method for manufacturing the fiber reinforced resin molded article according to any one of [14] to [24], the method comprising:

a step of compression molding a cloth prepreg or a prepreg laminate having one or more cloth prepregs,
in which the cloth prepreg is a prepreg formed of a woven fabric made of reinforcing fiber bundles as a warp and a weft.

[26] The manufacturing method according to [25],
in which the reinforcing fiber bundle is a carbon fiber bundle.
[27] The manufacturing method according to [26],
in which a fiber basis weight of the woven fabric is 240 g/m² or more.
[28] The manufacturing method according to [25] to [27],

in which a loosening rate of weft in the cloth prepreg, which is determined as follows, is 0.0% to 0.2%,
(method of obtaining loosening rate of weft)
a square fragment having two sides parallel to the warp and two sides perpendicular to the warp is cut out from the cloth prepreg, and the loosening rate of weft is obtained from lengths of the warp and weft taken out from the fragment by the following formula (I),

$$\text{loosening rate of weft} = \{(\text{length of weft} - \text{length of warp}) / \text{length of warp}\} \times 100 \quad (I).$$

[29] The manufacturing method according to [28],
in which the loosening rate of weft in the cloth prepreg is 0.1% or less, 0.05% or less, or 0.01% or less.
[30] The manufacturing method according to any one of [25] to [29],
in which the prepreg laminate further has, as an outermost layer, a resin film layer on at least one surface.
[31] The manufacturing method according to any one of [25] to [30],
in which the prepreg laminate has a foamed core layer stacked with the cloth prepreg.
[32] The manufacturing method according to any one of [25] to [31],
in which, a mold a resin flow percentage of which is set to be 0.0% to 0.5% by narrowing a clearance of a share edge is used for the compression molding.

[Advantageous Effects of Invention]

According to one aspect of the present invention, it is possible to provide a cloth prepreg for a fiber reinforced resin molded article having a surface through which a texture of a woven fabric formed of reinforcing fiber bundles is visible, and from which a molded article having an improved appearance in a case of being compression molded is obtained; and provide a method for manufacturing the cloth prepreg.
According to another aspect of the present invention, it is possible to provide a fiber reinforced resin molded article having a surface through which a texture of a woven fabric formed of reinforcing fiber bundles is visible, and having improved industrial productivity and an improved appearance; and provide a method for manufacturing the molded article.

[Brief Description of Drawings]

Fig. 1 is a perspective view showing a fiber reinforced resin molded article having local fiber meandering.
Fig. 2 is a schematic cross-sectional view of a cloth prepreg having a loose weft.
Fig. 3 is a schematic cross-sectional view showing deformation of a woven fabric in a case of compression molding a cloth prepreg having a loose weft.
Fig. 4 is a plan view showing that local fiber meandering occurs in a case of compression-molding the cloth prepreg having a loose weft.
Fig. 5 is a plan view for explaining a fiber meandering angle of a weft in a woven fabric in a molded article.
Fig. 6 is a plan view for explaining a fiber meandering angle of a weft in a woven fabric in a molded article.
Fig. 7 is a perspective view showing a shape of a molded article produced in an experiment.
Fig. 8 is a perspective view showing a shape of a molded article produced in an experiment.

[Description of Embodiments]

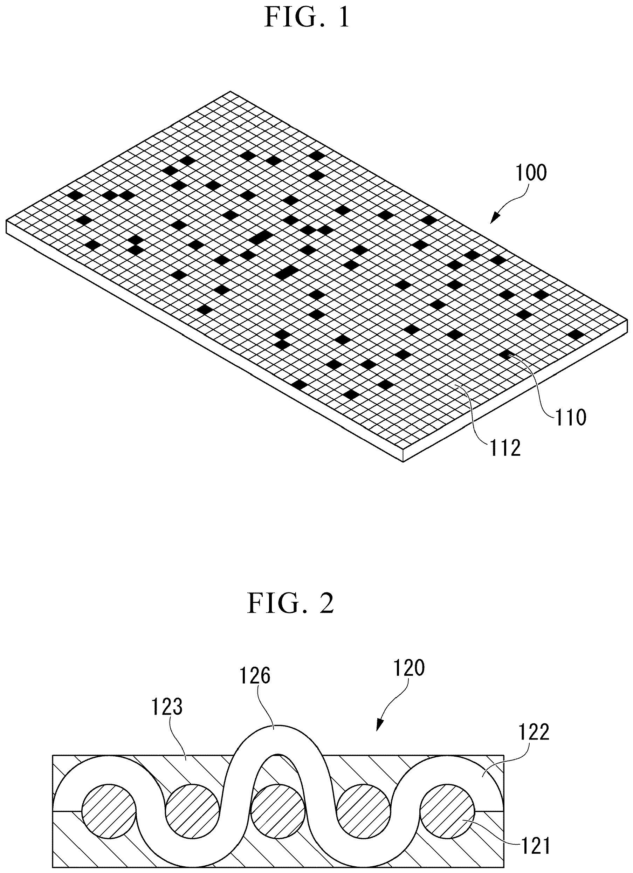

In the present specification and claims, "fiber meandering angle of a weft" means an angle formed by, in a case where a direction orthogonal to a warp is defined as a reference direction, filaments forming a reinforcing fiber bundle, which constitutes the weft, with respect to the reference direction. The fiber meandering angle of the weft is determined by the method used in the experiment described later.
In the present specification and claims, "to" showing a numerical range means that numerical values described before and after the numerical range are included as the lower limit value and the upper limit value.
Dimensional ratios in Figs. 1 to 8 may differ from the actual ones for the convenience of explanation.

<Effect of local fiber meandering in woven fabric on appearance of molded article>

First, the deterioration of the appearance of a fiber reinforced resin molded article due to the occurrence of local fiber meandering in the woven fabric will be described below.
Fig. 1 is a perspective view showing an example in which a fiber reinforced resin molded article using a woven fabric formed of reinforcing fiber bundles has local fiber meandering.
In a plain weave, the ups and downs of the warp and the weft form a texture of a lattice pattern. In a case where a thread (fiber bundle) on the floating side (front side) meanders, at a weave point (square of lattice), where the warp and the weft cross each other, the meandering portion becomes a defective portion 110.
In a case where a molded article 100 is visually observed from a distance of 1 to 3 m looking down at an angle of 30° to 45° under sunlight, fluorescent light, or the like, the defective portion 110 is observed to be different in color nuance from surrounding weave points (normal portion 112). Although it depends on the viewing angle of the molded article 100 and the intensity of the light source, the defective portion 110 always looks different in color nuance from the surrounding normal portion 112, with the defective portion 110 looking black in a case where the surrounding normal portion 112 looks white, and the defective portion 110 looking white in a case where the surrounding normal portion 112 looks black. Therefore, the defective portion 110 significantly impairs the aesthetic appearance made by the texture of the woven fabric.
Since the defective portion 110 is more noticeable under strong light, for example, more defective portions are apparent in a case where the same molded article is viewed under sunlight, compared to a case of being viewed under fluorescent lighting. In short, the effect of the defective portion 110 on the aesthetic appearance of the molded article 100, which is made by the texture, is greater in a case where the molded article 100 is viewed under sunlight.
The difference in color nuance between the defective portion 110 and the surrounding weave points (normal portion 112) is related to an orientation of fibers at the weave point.
What the observer who observes the molded article 100 sees is light reflected on the surface of the woven fabric. In a case where the orientation of fibers is uniform throughout the woven fabric, the way the light is reflected will be the same everywhere. On the other hand, in a case where there is local fiber meandering in the woven fabric, since the way the light is reflected changes only in a portion where the fibers meander, the color nuance appears different from the surroundings. As described above, the locality of fiber meandering is also a cause of the more remarkable difference in appearance between the defective portion 110 and the surrounding normal portion 112.
In the woven fabric, since the warp and the weft strongly restrain each other, the effect of fiber meandering at one weave point is unlikely to affect adjacent weave points. As a result, the occurrence of a defective portion 110 due to the fiber meandering becomes local, and further, each defective portion 110 becomes more conspicuous.
Here, "local" means that, for example, in a case where one weave point is set to be one square of the lattice, it is within a range of three squares in vertical and horizontal directions.

In UD prepreg as opposed to the cloth prepreg, the mutual restraint between reinforcing fiber bundles is loose. Therefore, even in a case where the fiber meandering occurs, the fiber meandering that has occurred is unlikely to be local, and the defective portion which is conspicuous when viewed is not formed.

Next, the mechanism by which the local fiber meandering occurs in the woven fabric in the fiber reinforced resin molded article will be described below.

In a step of manufacturing the woven fabric by combining the warp and the weft, loosening of the warp is unlikely to occur. This is because the warp is always under tension normally. On the other hand, the weft is easily loosened because the weft is pulled out by a shuttle, and then both ends are cut and woven in a state in which tension is not applied.

Even in a step of impregnating the woven fabric with a matrix resin, the woven fabric is pulled out from a roll in a warp direction, so that tension is applied in the warp direction. On the other hand, since no tension is applied in the weft direction, the obtained cloth prepreg may have a loose weft.

Fig. 2 is a schematic cross-sectional view perpendicular to the warp of a cloth prepreg having a loose weft.

A cloth prepreg 120 shown in Fig. 2 includes a woven fabric woven from a warp 121 and a weft 122, and a matrix resin 123 impregnated in the woven fabric. The warp 121 and the weft 122 are each a fiber bundle.

The above-described woven fabric has a protrusion part 126 at a part of the weave point. The protrusion part 126 is an abnormal part in which the weft 122 protrudes in an out-of-plane direction of the cloth prepreg. As the protrusion part 126, there are cases where the entire fiber bundle is projected and cases where some of the filaments forming the fiber bundle are projected.

In a case of compression molding the cloth prepreg having a loose weft, the local fiber meandering occurs. This is because, in the compression molding, the prepreg is sandwiched between rigid bodies from both sides and compressed.

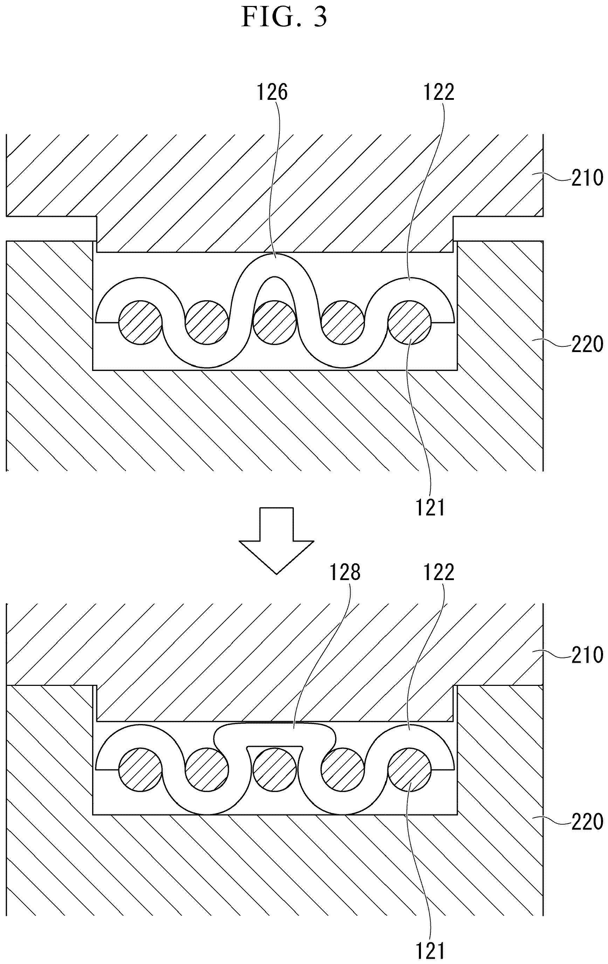

Fig. 3 is a schematic cross-sectional view showing the deformation of the woven fabric in a case of compression molding the cloth prepreg 120 having a loose weft 122. In Fig. 3, the matrix resin is not shown for the sake of clarity.

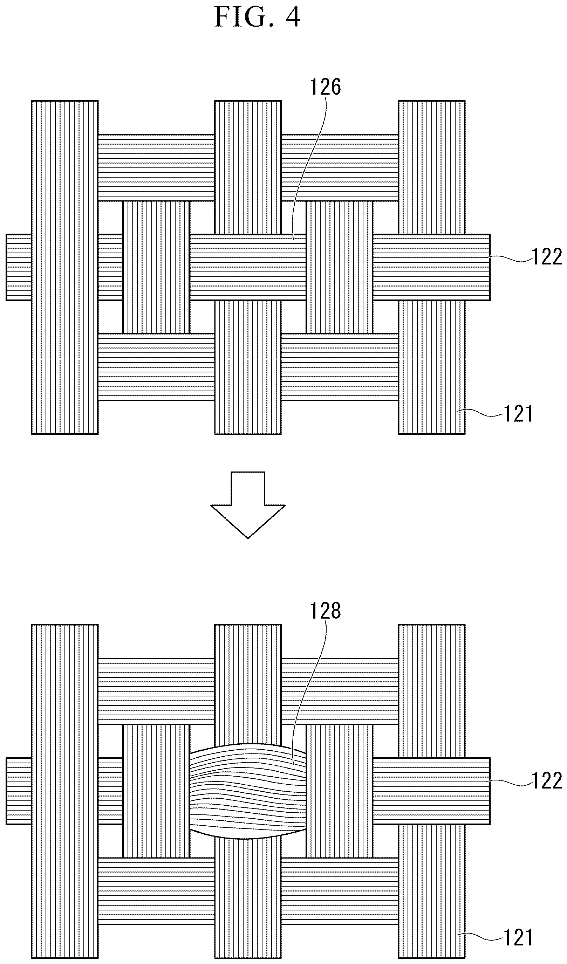

In a case where the cloth prepreg having a loose weft 122 is compression molded with a pair of an upper mold 210 and a lower mold 220, the protrusion part 126 is squashed to the same height as the normal portion. At this time, the weft 122 of the protrusion part 126 is expanded in a horizontal direction (a direction orthogonal to a compression direction). As a result, as shown in Fig. 4, a fiber meandering part 128 is locally formed on the woven fabric in the compression molded article.

As described above, in a case of compression molding the cloth prepreg, the loosening of the weft in the cloth prepreg causes the local fiber meandering in the woven fabric. Therefore, in a case of compression molding the cloth prepreg, it is effective to reduce the loosening of the weft in the cloth prepreg before the compression molding so that the aesthetic appearance made by the texture of the woven fabric is not impaired.

<Cloth prepreg>

The cloth prepreg according to an embodiment of the present invention includes a woven fabric made of reinforcing fiber bundles as a warp and a weft, in which a texture of the woven fabric is visible through at least one surface.

In the cloth prepreg, a loosening rate of weft is 0.0% to 0.2%, preferably 0.0% to 0.1%, more preferably 0.0% to 0.05%, and particularly preferably 0.0% to 0.01%. In a case where the loosening rate of weft is the upper limit value or less of the above-described range, the occurrence of local fiber meandering during compression molding is suppressed, and the appearance of the compression molded article is aesthetically preferable.

The loosening rate of weft is as follows.

(Method of obtaining loosening rate of weft)

A square fragment having two sides parallel to the warp and two sides perpendicular to the warp is cut out from the cloth prepreg, and the loosening rate of weft is obtained from lengths of the warp and weft taken out from the fragment by the following formula (I).

$$\text{Loosening rate of weft} = \{(\text{length of weft - length of warp}) / \text{length of warp}\} \times 100 \quad (I)$$

The size of the square fragment cut out from the cloth prepreg for measuring the loosening rate of weft is not particularly limited, but is preferably 298 mm × 298 mm or more.

In order to take out the warp and the weft from the square fragment, for example, the fragment may be heated to soften the matrix resin, or the matrix resin may be removed with an organic solvent such as acetone or methyl ethyl ketone.

Since the variation in lengths of the warp and the weft taken out from the square fragment is small, it is sufficient to take out several bundles of warp and weft from the fragment in order to obtain the loosening rate of weft represented by the formula (I). In particular, the length of the warp usually has almost no variation. With regard to the weft, the longest weft may be selected from the weft taken out, and the loosening rate may be obtained from the formula (I) using the length thereof.

The reinforcing fiber bundle consists of, for example, carbon fiber, glass fiber, aramid fiber, high-strength polyester fiber, boron fiber, alumina fiber, silicon nitride fiber, or nylon fiber. In the woven fabric, only one kind of reinforcing fiber bundle may be used, or two or more kinds of reinforcing fiber bundles may be used in combination.

In particular, from the viewpoint of excellent specific strength and specific elasticity, a carbon fiber bundle, which is made of carbon fibers, is preferable as the reinforcing fiber bundle.

In a case where the reinforcing fiber bundle of the woven fabric is the carbon fiber bundle, the fiber basis weight thereof is preferably 240 g/m$^2$ or more, but is not limited and may be less than 240 g/m$^2$.

What the present inventor has learned from experiments is as follows:

as for cloth prepregs including a woven fabric made of a reinforcing fiber bundle formed of carbon fiber as a warp and a weft, comparing a case where the fiber basis weight of the woven fabric is 200 g/m$^2$ and a case where the fiber basis weight of the woven fabric is 240 g/m$^2$ or more, as far as the loosening rates of weft in the woven fabric are approximately the same, the appearance of the compression molded article under fluorescent lighting is better in the case where the fiber basis weight of the woven fabric is 240 g/m$^2$ or more;

on the other hand, even with a cloth prepreg having 200 g/m$^2$ as a fiber basis weight of the woven fabric formed of the carbon fiber bundle, in a case where the loosening rate of weft is sufficiently reduced, the appearance of the compression molded article is good not only under fluorescent lighting but also under sunlight.

The fiber basis weight of the woven fabric is not particularly limited, but for example, in order to facilitate impregnation with the matrix resin, it is preferably 800 g/m$^2$ or less.

The number of filaments in the reinforcing fiber bundle is preferably 1000 to 50000 and more preferably 1000 to 15000. In a case where the number of filaments is the lower limit value or more of the above-described range, the number of fiber bundles constituting the woven fabric can be reduced, which suppresses the cost of the woven fabric. In a case where the number of filaments is the upper limit value or less of the above-described range, the effect that an opening treatment of the fiber bundle is not essential and the effect of improving handleability of the woven fabric are exhibited.

Examples of the weave of the woven fabric include a plain weave, a twill weave (oblique weave), and a sateen weave. Among these, from the viewpoint that the cloth prepreg can be easily shaped, a plain weave or twill weave is preferable.

The matrix resin of the cloth prepreg may be thermosetting or thermoplastic. Examples of a thermosetting resin which can be used for the matrix resin include an epoxy resin, an unsaturated polyester resin, an acrylic resin, a vinyl ester resin, a phenol resin, and a benzoxazine resin. In particular, from the viewpoint that physical properties after curing are good, an epoxy resin is preferable.

The thermosetting matrix resin can further include a curing agent, a curing accelerator, a thickener, a polymerization initiator, and the like.

It is desirable to minimize the use of additives which impair transparency of the matrix resin. For example, the matrix resin can contain carbon black for the purpose of improving physical properties and the like, but it is desirable that the added amount of carbon black does not exceed 0.4 parts by mass with respect to 100 parts by mass of the resin.

The content of the matrix resin in the cloth prepreg is preferably 30 to 60 parts by mass and more preferably 30 to 45 parts by mass with respect to 100 parts by mass of the woven fabric. In a case where the content of the matrix resin is the lower limit value or more of the above-described range, the strength of the molded article is unlikely to decrease due to formation of void. In a case where the content of the matrix resin is the upper limit value or less of the above-described range, the mold is less likely to become dirty by compression molding of the cloth prepreg, and the time required for cleaning the mold can be shortened.

(Method for manufacturing cloth prepreg)

The cloth prepreg of the present invention can be manufactured by, for example, preparing a starting cloth prepreg which includes a woven fabric made of a reinforcing fiber bundle as a warp and a weft, and stretching the starting cloth prepreg by pulling in a weft direction.

The starting cloth prepreg is prepared by impregnating the woven fabric with the matrix resin. For manufacturing of the woven fabric, for example, a rapier loom, a shuttle loom, a gripper loom, a jet loom, and the like can be used.

Examples of the impregnation method include a lacquer method (solvent method), in which a woven fabric is immersed in a resin solution in which a matrix resin is dissolved; and a hot melt method, in which a film formed of a matrix resin is thermocompressed with a woven fabric.

According to what the present inventors have found, by gripping the starting cloth prepreg produced in advance at the both ends in the weft direction and stretching it by pulling in the weft direction, the loosening rate of weft is reduced.

For example, by stretching a starting cloth prepreg having more than 0.2% of a loosening rate of weft by pulling in the weft direction, the loosening rate of weft can be reduced to 0.2% or less. By stretching a cloth prepreg having 0.2% or less of a loosening rate of weft by pulling in the weft direction, the loosening rate of weft can be further reduced.

The loosening rate of weft in the cloth prepreg of the present invention is preferably 0.0% to 0.1%, more preferably 0.0% to 0.05%, and particularly preferably 0.0% to 0.01%.

The cloth prepreg having a low loosening rate of weft can also be manufactured by, while applying tension to the weft of the woven fabric, impregnating the woven fabric made of reinforcing fiber bundles as a warp and a weft with a matrix resin.

(Applications)

The cloth prepreg according to the embodiment of the present invention described above gives particularly preferred results when applied to manufacturing of a fiber reinforced resin molded article by compression molding. Details and preferred embodiments of the manufacturing of the fiber reinforced resin molded article by compression molding will be described below in the section of <Method for manufacturing fiber reinforced resin molded article>.

<Method for manufacturing fiber reinforced resin compression molded article>

The method for manufacturing a fiber reinforced resin molded article according to an embodiment of the present invention includes compression molding a cloth prepreg which includes a woven fabric made of reinforcing fiber bundles as a warp and a weft, in which a texture of the woven fabric is visible through at least one surface, or a prepreg laminate having one or more such cloth prepregs; and obtaining a compression molded article having a surface through which a texture of a woven fabric is visible.

The cloth prepreg which can be preferably used in this method is the cloth prepreg described in the above section <Cloth prepreg>, and the prepreg laminate which can be preferably used in this method is a prepreg laminate including one or more such cloth prepregs.

In addition to the cloth prepreg, the prepreg laminate may have, for example, a prepreg other than the cloth prepreg, a resin film layer, a foamed core layer, and the like.

In a preferred prepreg laminate, the cloth prepreg described in the above section <Cloth prepreg> is arranged, as an outermost layer, on a side which becomes a design surface of the molded article.

In another preferred prepreg laminate, the resin film layer is arranged, as an outermost layer, on the side which becomes the design surface of the molded article, and the cloth prepreg described in the above section <Cloth prepreg> is arranged as a layer directly below the resin film layer.

The resin film may be formed of a thermosetting resin or may be formed of a thermoplastic resin. Examples of a thermosetting resin include an epoxy resin, an unsaturated polyester resin, an acrylic resin, a vinyl ester resin, a phenol resin, and a benzoxazine resin. Among these, from the viewpoint that strength after curing is high, an epoxy resin is preferable.

The resin composition constituting the resin film may be the same or different from the matrix resin included in the cloth prepreg. From the viewpoint of increasing adhesion between each layer of the molded article, it is preferable to use a resin film having the same resin composition as the matrix resin included in the cloth prepreg.

The resin film may be reinforced with a non-woven fabric formed of glass or polyester.

The foamed core layer which can be included in the prepreg laminate is, for example, a closed-cell type foamed material having a sheet shape. The foamed material contains, for example, polymethacrylicimide as a main component.

In a case of compression molding the prepreg laminate, it is preferable that no air remains between the layers of the prepreg laminate, in order to prevent voids from forming since voids may deteriorate mechanical properties of the molded article.

Preferred examples of a method of removing the residual air from the prepreg laminate include a method of sandwiching the prepreg laminate with a flat surface and a vacuum bag method, and among these, the vacuum bag method is preferable. In the vacuum bag method, the prepreg laminate is covered with a bagging film, and the inside of the bagging film is evacuated.

By pre-shaping the cloth prepreg or the prepreg laminate prior to the compression molding, a preform having a net shape of the desired molded article shape may be produced.

As the pre-shaping, for example, the following methods can be used.

· A method of manually pasting the cloth prepreg or the prepreg laminate onto a shaping mold
· A method in which the cloth prepreg or the prepreg laminate is arranged on a shaping mold and the shaping mold is placed in a rubber bag, and the inside of the bag is evacuated to press the cloth prepreg or the prepreg laminate against the shaping mold
· A method of molding using a simple molding machine Two or more of these methods may be appropriately selected and combined.

Examples of material of the shaping mold include metal and chemical wood. From the viewpoint of being inexpensive and easy to process, chemical wood is preferable as the material of the shaping mold.

The cloth prepreg or the prepreg laminate may be pre-heated prior to the pre-shaping. The pre-heating is performed for the purpose of appropriately reducing the viscosity of the matrix resin included in the prepreg and facilitating the work of pre-shaping.

In a case where the matrix resin included in the prepreg is an epoxy resin, the pre-heating is preferably performed such that a surface temperature of the cloth prepreg or the prepreg laminate is 40 °C to 80 °C. In a case where the surface temperature is 40 °C or higher, the matrix resin tends to have sufficient shapability. In a case where the surface temperature is 80 °C or lower, since the viscosity of the matrix resin is maintained at an appropriate level, there is a tendency that a molded article having excellent mechanical properties can be finally obtained without causing fiber disorder of the preform during the pre-shaping.

As the pre-heating of the cloth prepreg or the prepreg laminate, for example, the following methods can be used.

• A method of applying warm air
• A method of irradiating it with infrared rays
• A method of placing it on a heated plate

From the viewpoint that the pre-heating can be performed in a short time, and the cloth prepreg or the prepreg laminate after pre-heating can be easily handled, the method of irradiating it with infrared rays is preferable.

In the method for manufacturing the compression molded article of the present invention, as necessary, the cloth prepreg, the prepreg laminate, or the preform may be cut into a predetermined shape prior to the compression molding. To produce a preform close to the net shape, for example, the following methods can be used.

· A method of shaping the prepreg laminate after cutting the prepreg laminate in to the shape into which the finished product can be flat-developed

· A method in which, after shaping the prepreg laminate into a preform having almost a net shape, the excess portion is cut off

The method having higher dimensional accuracy of the obtained preform is the latter method in which the excess portion is cut off after producing the preform.

The compression molding is a method in which a molding material (cloth prepreg or prepreg laminate, or preform) is placed in a mold, and the molding material is molded by heating and pressurizing at a predetermined temperature and pressure using a pressurizer. In a case of a thermosetting molding material, the molding material cures at the same time as molding.

It is preferable to set a temperature of the mold to the predetermined temperature, and then perform the compression molding and take the molded article out at that temperature. As a result, raising and lowering the temperature of the mold is not necessary, and therefore the molding cycle can be shortened and the productivity is improved.

As material of the mold, metal which is not easily deformed even in a case where a high pressure is applied is preferable. In particular, as the metal, cast iron (carbon steel) such as S45C and S55C is preferable from the viewpoint that it is not easily deformed and has toughness.

As the mold, from the viewpoint of suppressing voids on the surface of the molded article, a mold equipped with a vacuum mechanism is preferable. In particular, a closed mold having a narrow share edge clearance is more preferable from the viewpoint that the effect of the vacuum mechanism can be enhanced.

As the pressurizer, from the viewpoint of being able to adjust the molding pressure and a mold clamping speed, a hydraulic pressure press machine is preferable, and a hydraulic pressure press machine having a leveling mechanism capable of adjusting mold clamping parallelism is more preferable.

The temperature of compression molding is preferably 110 °C to 180 °C and more preferably 130 °C to 150 °C, which is the temperature of the mold. In a case where the molding material is thermosetting, in a case where the temperature of the mold is the lower limit value or more of the above-described range, the curing time becomes sufficiently short so that the molding cycle can be shortened, and in a case where the temperature of the mold is the upper limit value or less of the above-described range, the problem caused by the curing time being too short can be avoided.

The pressure used in the compression molding is usually 1.0 MPa or more, preferably 3.0 MPa or more, and is usually 15.0 MPa or less, preferably 5.0 MPa or less. In a case where the pressure during compression molding is the lower limit value or more of the above-described range, pinholes on the surface of the molded article or voids inside the molded article are unlikely to occur. In a case where the pressure during compression molding is the upper limit value or less of the above-described range, the matrix resin is not excessively squeezed, and resin drought is less likely to occur on the surface of the molded article. As a result, the gloss of the surface of the molded article can be maintained.

The following means 1 to 4 can be adopted in order to prevent defective portions on the appearance due to local fiber meandering in the compression molded article.

Means 1: using a cloth prepreg having a low loosening rate of weft
Means 2: using a cloth prepreg having a high fiber basis weight of the woven fabric
Means 3: laminating a resin film layer directly above a cloth prepreg
Means 4: using a mold having a narrow share edge clearance

One of the above-described means 1 to 4 may be used alone, or two or more thereof may be used in combination. Among these, the means 1 is particularly effective. The means 2 to 4 may be used alone, but it is preferable to use the means 2 to 4 in combination with the means 1. Two or more of the means 2 to 4 may be selected and combined with the means 1.

(Specific example of means 1)

A cloth prepreg having a loosening rate of weft of more than 0.2% is prepared. A warp direction of the cloth prepreg is defined as 0°, and a laminated structure [0/0/0/0] in which four sheets are laminated in the same warp direction is defined as a laminate (A).

Air remaining between the cloth prepregs of the laminate (A) is sucked out by the vacuum bag method.

Next, by grasping both ends of the laminate (A) in the 90° direction (weft direction) and pulling the laminate (A) in that direction, the loosening rate of weft in the cloth prepreg is adjusted to 0.2% or less, preferably 0.1% or less, more preferably 0.05% or less, and particularly preferably 0.01% or less.

After adjusting the loosening rate of weft, the laminate (A) is compression-molded.

(Modified example of means 1)

In a modified example of the means 1, tension may be applied to the cloth prepreg or the prepreg laminate during compression molding rather than before compression molding to reduce loosening of the weft in the cloth prepreg.

(Specific example of means 2)

A cloth prepreg which has a surface through which a texture of a woven fabric made of carbon fiber bundles as a warp and a weft is visible, and has 240 $g/m^2$ or more as a fiber basis weight of the woven fabric is prepared. This cloth prepreg is used for at least the outermost layer of the laminate (A) in the specific example of the means 1 on a side which becomes the design surface of the molded article.

As in the specific example of the means 1, the loosening rate of weft may be reduced by pulling the laminate (A) in the weft direction before compression molding.

(Specific example of means 3)

A laminated structure [resin film/0/0/0/0] in which a resin film is further laminated on the laminate (A) in the specific example of the means 1 is defined as a laminate (B). The resin film surface serves as the design surface of the molded article. The resin film may be arranged on both sides of the laminate (A).

Next, the residual air is sucked out from the laminate (B) by the vacuum bag method, and compression molding is performed.

In the means 3, even in a case where the weft has a weave point protruding out of the plane of the prepreg, the resin film acts as a cushion against the pressure applied from the mold, so that it is presumed that the crushing of that portion during molding is alleviated.

(Means 4)

In the means 4, compression molding is performed using a mold having a narrow share edge clearance. By using the mold having a narrow share edge clearance, the amount of resin flowing out of the mold during molding is reduced, and a resin layer is formed on the surface of the molded article. It is presumed that this resin layer acts as a cushion in the same manner as the resin film in the means 3.

A mold in which a resin flow percentage represented by the expression (II) is set to be 0.0% to 0.5% by narrowing a clearance of a share edge is preferably used.

$$\text{Resin flow percentage} = (\text{mass of molding material before mold charging - net}$$

$$\text{mass of molded article}) / \text{mass of molding material before mold charging} \qquad (\text{II})$$

(Fiber reinforced resin molded article)

A fiber reinforced resin molded article which can be manufactured by the manufacturing method described above is also included in the embodiment of the present invention.

In the fiber reinforced resin molded article according to the embodiment, it is preferable that a surface (preferably, the design surface) through which the texture of the woven fabric formed of reinforcing fibers is visible have a 30 cm $\times$ 30 cm square region where the maximum value of the fiber meandering angle of the weft in the region is 12 degrees or less. It is more preferable that the surface have a 30 cm $\times$ 30 cm square region where the maximum value of the fiber meandering angle of the weft in the region is 10 degrees or less.

In the fiber reinforced resin molded article according to the embodiment, the area of the surface through which the texture of the woven fabric formed of reinforcing fibers is visible can be less than 900 cm$^2$. In this case, the maximum value of the fiber meandering angle of the weft in the surface is preferably 12 degrees or less and more preferably 10 degrees or less. The area of the surface is preferably 100 cm$^2$ or more, more preferably 250 cm$^2$ or more, and still more preferably 500 cm$^2$ or more.

According to the results of, using a cloth prepreg using a woven fabric made of carbon fiber bundles as a warp and a weft, a trial production and investigation by the present inventors of a compression molded article having a design surface through which the texture of the woven fabric is visible, in a molded article in which a 30 cm $\times$ 30 cm square region, where the defective portion which always looks different in color nuance from the surroundings is not observed under fluorescent lighting, is present on the design surface, the maximum value of the fiber meandering angle of the weft in the square region is 12 degrees or less. Further, in a molded article in which a 30 cm $\times$ 30 cm square region, where such defective portion is not observed under sunlight, is present on the design surface, the maximum value of the fiber meandering angle of the weft in the square region is 10 degrees or less.

(Applications)

The fiber reinforced resin molded article according to the embodiment can be applied to applications as automobile parts, and is particularly suitable as an automobile outer panel member such as a roof, a hood, or a trunk lid.

The present invention is not limited to the above-described embodiments, and various modifications can be made. Embodiments obtained by appropriately combining technical means disclosed in the embodiments are also included in the technical scope of the present invention.

<Experimental results>

The following is the results of experiments conducted by the present inventors.

<Measurement of loosening rate of weft in cloth prepreg>

The loosening rate of weft of the woven fabric in the cloth prepreg used in each experiment that will be described later was measured as follows.

The cloth prepreg was cut so that two opposite sides were parallel to the warp and the remaining two sides were parallel to the weft, thereby obtaining a 298 mm $\times$ 298 mm square fragment. By heating the square fragment with an infrared heater to soften the matrix resin, three warp bundles and three weft bundles were taken out from the fragment.

Next, the length of the thread that was taken out was measured, and the loosening rate of weft represented by the formula (I) was obtained from the length of the warp and the length of the longest weft. In all measurements, the lengths between the three warp bundles that were taken out were substantially the same, and the difference in length between the threads was less than 0.01 mm.

$$\text{Loosening rate of weft} = \{(\text{length of weft - length of warp}) / \text{length of warp}\} \times 100 \qquad (I)$$

<Production of compression molded article>

(Raw material)

Cloth prepreg-1: a sheet-shaped cloth prepreg in which an epoxy resin composition is impregnated in a plain weave woven fabric formed of a carbon fiber bundle (number of filaments: 6000) (manufactured by Mitsubishi Chemical Corporation, TR6110 360GMP, content of the matrix resin with respect to 100 parts by mass of the woven fabric: 40 parts by mass, loosening rate of weft: 0.30%, fiber basis weight of the woven fabric: 300 g/m$^2$)

Cloth prepreg-2: a sheet-shaped cloth prepreg in which an epoxy resin composition is impregnated in a plain weave woven fabric formed of a carbon fiber bundle (number of filaments: 3000) (manufactured by Mitsubishi Chemical Corporation, TR3110 360GMP, content of the matrix resin with respect to 100 parts by mass of the woven fabric: 40 parts by mass, loosening rate of weft: 0.30%, fiber basis weight of the woven fabric: 200 g/m$^2$)

Cloth prepreg-3: a sheet-shaped cloth prepreg in which an epoxy resin composition is impregnated in a twill weave woven fabric formed of a carbon fiber bundle (number of filaments: 3000) (manufactured by Mitsubishi Chemical Corporation, TR3523 360GMP, content of the matrix resin with respect to 100 parts by mass of the woven fabric: 40 parts by mass, loosening rate of weft: 0.29%, fiber basis weight of the woven fabric: 200 g/m$^2$)

Cloth prepreg-4: a sheet-shaped cloth prepreg in which an epoxy resin composition is impregnated in a twill weave woven fabric formed of a carbon fiber bundle (number of filaments: 3000) (manufactured by Mitsubishi Chemical Corporation, TR3523 360GMP, content of the matrix resin with respect to 100 parts by mass of the woven fabric: 40 parts by mass, loosening rate of weft: 0.29%, fiber basis weight of the woven fabric: 240 g/m$^2$)

Lightweight foam core: a closed-cell foaming material containing polymethacrylicimide as a main component and having a sheet shape (manufactured by EVONICK, Rohacell 71SL)

(Molded article)

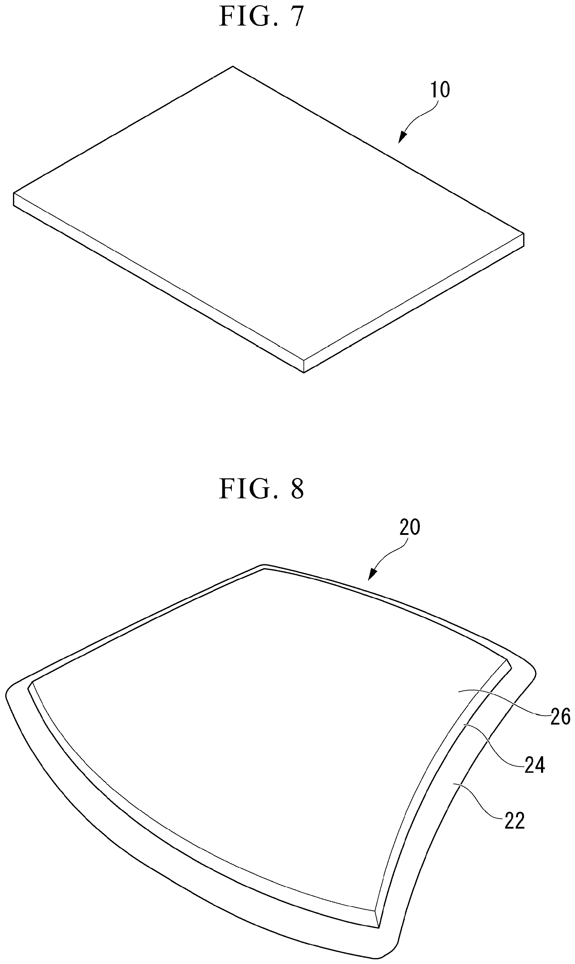

In each experiment, a flat plate-shaped molded article 10 as shown in Fig. 7 or a three-dimensional-shaped molded article 20 as shown in Fig. 8 was produced. The molded article 20 had an outer flange part 22, an elevation surface 24 rising from the inside of the flange part 22, and a top surface 26 which was connected to the upper end of the elevation surface 24 and extended inside the elevation surface 24.

<Measurement of fiber meandering angle of weft in molded article>

The fiber meandering angle of the weft in the molded article obtained in each experiment that will be described later was measured by the following procedure.

In a case of the flat plate-shaped molded article 10, the design surface thereof was partitioned in a lattice pattern so that 100 squares having 3 cm square could be formed. 50 squares were selected from these 100 squares, and further from each of the 50 squares, one weave point with the weft on the front side was selected. Thereafter, at that weave point, the angle formed by reinforcing fiber filaments forming the weft with respect to the reference direction was measured. The total number of measurement points was 50.

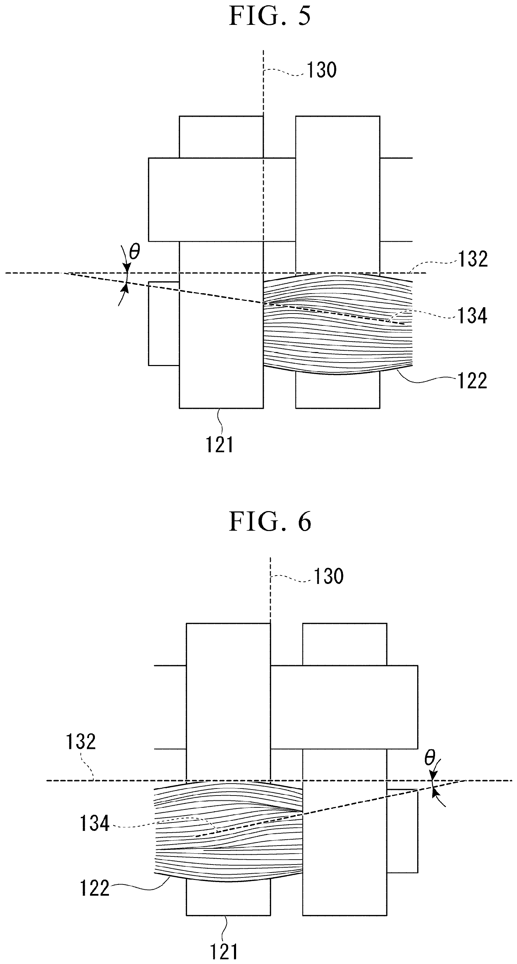

Explaining with reference to Figs. 5 and 6, the reference direction is a direction (direction of a straight line 132) orthogonal to the warp 121 adjacent to the selected weave point. In the selected weave point, the angle at which the reinforcing fiber filament forming the weft 122 forms the largest angle with respect to the reference direction (angle $\theta$ formed by a straight line 134 with respect to the straight line 132) is defined as the fiber meandering angle of the weft.

In a case of the three-dimensional-shaped molded article 20, the design surface of the top surface 26 was partitioned in a lattice pattern so that squares having 3 cm square could be formed, and the same measurement as in the case of the molded article 10 was performed on 50 of the squares.

(Experiment 1)

A molded article was produced by performing the following steps (1) to (3) in the following order.

Step (1): The cloth prepreg-1 was cut into a 298 mm $\times$ 298 mm square fragment such that two opposite sides were parallel to the warp and the remaining two sides were parallel to the weft.

Step (2): The warp direction was defined as 0°, the four cloth prepregs cut in the step (1) were aligned in the same direction, and four sides were aligned and laminated to obtain a laminate (a) having a laminated structure [0/0/0/0]. The residual air between the laminates was sucked out by the vacuum bag method.

Step (3): Using a mold having a resin flow percentage of 8%, the laminate (a) was compression-molded under the conditions of a temperature of 140 °C, a pressure of 4 MPa, and a pressurization time of 5 minutes, thereby obtaining a molded article 10 having a length of 300 mm, a width of 300 mm, and a thickness of 0.8 mm.

(Experiment 2)

A molded article 10 was obtained in the same manner as in the experiment 1, except that the cloth prepreg-1 was changed to the cloth prepreg-4.

(Experiment 3)

A molded article 10 was obtained in the same manner as in the experiment 1, except that the cloth prepreg-1 was changed to the cloth prepreg-2 and the mold was changed to a mold having a resin flow percentage of 0.1% or less.

(Experiment 4)

A molded article 10 was obtained in the same manner as in the experiment 1, except that the cloth prepreg-1 was changed to the cloth prepreg-2, and a resin film which was formed of the same resin composition as the matrix resin of the cloth prepreg and had 150 g/m$^2$ was laminated on the laminate (a) to set the laminated structure as [resin film/0/0/0/0].

(Experiment 5)

A molded article was produced by performing the following steps (1) to (5) in the following order.

Step (1): The cloth prepreg-2 was cut into a 298 mm $\times$ 338 mm square fragment such that short sides were parallel to the warp and long sides were parallel to the weft.

Step (2): The warp direction was defined as 0°, the four cloth prepregs cut in the step (1) were aligned in the same direction, and four sides were aligned and laminated to obtain a laminate (b) having a laminated structure [0/0/0/0]. The residual air between the laminates was sucked out by the vacuum bag method.

Step (3): By sandwiching both ends of the laminate (b) in the weft direction with clamps and stretching the laminate (b) by pulling in the weft direction, the loosening rate of weft of cloth prepreg in the laminate (b) was reduced to 0.05%.

Step (4): The laminate (b) stretched in the step (3) was cut into a square of 298 mm $\times$ 298 mm.

Step (5): The laminate (b) was compression-molded under the conditions of a temperature of 140 °C, a pressure of 4 MPa, and a pressurization time of 5 minutes, thereby obtaining a molded article 10 having a length of 300 mm, a width of 300 mm, and a thickness of 0.8 mm.

(Experiment 6)

A molded article 20 was obtained in the same manner as in the experiment 5, except that the step (5) of the experiment 5 was changed to the following step (6), and the following step (7) was added thereafter.

Step (6): The laminate (b) was heated with an infrared heater so that the surface temperature thereof reached 70 °C, and then shaped into the same shape as a molded article to be obtained by using a shaping mold to obtain a preform (p).

Step (7): Using a mold having a resin flow percentage of 8%, the preform (p) was compression-molded under the conditions of a temperature of 140 °C, a pressure of 4 MPa, and a pressurization time of 5 minutes, thereby obtaining a molded article 20.

(Experiment 7)

A molded article 10 was obtained in the same manner as in the experiment 5, except that the cloth prepreg-2 was changed to the cloth prepreg-3. The loosening rate of weft of the cloth prepreg after stretching the laminate (b) in the step (3) was 0.01% or less.

(Experiment 8)

A molded article 20 was obtained in the same manner as in the experiment 6, except that the cloth prepreg-2 was changed to the cloth prepreg-3. The loosening rate of weft of the cloth prepreg after stretching the laminate (b) in the step (3) was 0.01% or less.

(Experiment 9)

A molded article 10 was obtained in the same manner as in the experiment 5, except that a lightweight foamed core layer was inserted in the middle of the laminate (b) so that the laminated structure was set to [0/0/foam core/0/0].

(Experiment 10)

A molded article 20 was obtained in the same manner as in the experiment 6, except that a lightweight foamed core layer preformed to the same shape as the preform (p) was inserted in the middle of the laminate (b) so that the laminated structure was set to [0/0/foam core/0/0].

(Experiment 11)

A molded article 10 was obtained in the same manner as in the experiment 1, except that the cloth prepreg-1 was changed to the cloth prepreg-2.

(Experiment 12)

A molded article 20 was obtained in the same manner as in the experiment 6, except that the step (3) was omitted.

(Experiment 13)

A molded article 10 was obtained in the same manner as in the experiment 9, except that the step (3) was omitted.

(Experiment 14)

A molded article 20 was obtained in the same manner as in the experiment 10, except that the step (3) was omitted.

The conditions in the experiments 1 to 14 are shown in Table 1. In addition, in each of the molded articles obtained in the experiments 1 to 14, the results of measuring the maximum value of the fiber meandering angle of the weft are shown in Table 2.

[Table 1]

|  | Fiber basis weight of woven fabric (g/m$^2$) | Laminated structure of prepreg laminate | Means for preventing local fiber meandering in molded article | Shape of molded article |
|---|---|---|---|---|
| Experiment 1 | 300 | [0/0/0/0] | Means 2 | Molded article 10 |
| Experiment 2 | 240 | [0/0/0/0] | Means 2 | Molded article 10 |
| Experiment 3 | 200 | [0101010] | Means 4 | Molded article 10 |
| Experiment 4 | 200 | [resin film/0/0/0/0] | Means 3 | Molded article 10 |

(continued)

| | Fiber basis weight of woven fabric (g/m²) | Laminated structure of prepreg laminate | Means for preventing local fiber meandering in molded article | Shape of molded article |
|---|---|---|---|---|
| Experiment 5 | 200 | [0/0/0/0] | Means 1 | Molded article 10 |
| Experiment 6 | 200 | [0/0/0/0] | Means 1 | Molded article 20 |
| Experiment 7 | 200 | [0/0/0/0] | Means 1 | Molded article 10 |
| Experiment 8 | 200 | [0101010] | Means 1 | Molded article 20 |
| Experiment 9 | 200 | [0/0/foam core/0/0] | Means 1 | Molded article 10 |
| Experiment 10 | 200 | [0/0/foam core/0/0] | Means 1 | Molded article 20 |
| Experiment 11 | 200 | [0/0/0/0] | - | Molded article 10 |
| Experiment 12 | 200 | [0/0/0/0] | - | Molded article 20 |
| Experiment 13 | 200 | [0/0/foam core/0/0] | - | Molded article 10 |
| Experiment 14 | 200 | [0/0/foam core/0/0] | - | Molded article 20 |

[Table 2]

| | Maximum value of fiber meandering angle of weft in molded article |
|---|---|
| Experiment 1 | 12 degrees |
| Experiment 2 | 11 degrees |
| Experiment 3 | 12 degrees |
| Experiment 4 | 12 degrees |
| Experiment 5 | 8 degrees |
| Experiment 6 | 9 degrees |
| Experiment 7 | 8 degrees |
| Experiment 8 | 10 degrees |
| Experiment 9 | 9 degrees |
| Experiment 10 | 10 degrees |
| Experiment 11 | 14 degrees |
| Experiment 12 | 14 degrees |
| Experiment 13 | 14 degrees |
| Experiment 14 | 15 degrees |

The compression molded articles of the experiments 1 to 10 were excellent in appearance. In particular, in the compression molded articles of the experiments 5 to 10, in which the maximum value of the meandering angle of the weft was 10 degrees or less in the 300 mm × 300 mm square region on which the measurement was performed, in a case where the square region was observed under sunlight, a defective portion that always looked different in color nuance from the surroundings was not observed.

In the compression molded articles of the experiments 1 to 4, in which the maximum value of the meandering angle of the weft was more than 10 degrees and 12 degrees or less in the 300 mm × 300 mm square region on which the measurement was performed, a defective portion that always looked different in color nuance from the surroundings was not observed in a case where the square region was observed under fluorescent lighting, but such a defective portion was observed when it was observed under sunlight.

The compression molded articles of the experiments 11 to 14 were inferior in appearance. Specifically, in a case where the 300 mm × 300 mm square region on which the measurement was performed was observed under sunlight, and a case where the square region was observed under fluorescent lighting, a defective portion that always looked different in color nuance from the surroundings was observed.

[Industrial Applicability]

The fiber reinforced resin molded article according to the present invention or manufactured by carrying out the present invention is useful as an automobile part, and is particularly useful as an automobile outer panel member such as a roof, a hood, or a trunk lid.

[Reference Signs List]

    10: molded article
    20: molded article
    22: flange part
    24: elevation surface
    26: top surface
    100: molded article
    110: defective portion
    112: normal portion
    120: prepreg
    121: warp
    122: weft
    123: matrix resin
    126: protrusion part
    128: fiber meandering part
    130: straight line parallel to warp
    132: straight line orthogonal to warp (straight line parallel to reference direction)
    134: straight line along direction of reinforcing fiber filament at point where reinforcing fiber filament forms maximum angle with reference direction
    210: upper mold
    220: lower mold
    θ: fiber meandering angle of weft

Claims

1.  A fiber reinforced resin molded article comprising:

        a fiber reinforced resin layer including a woven fabric made of carbon fiber bundles as a warp and a weft, wherein the fiber reinforced resin molded article is a compression molded article, the fiber reinforced resin molded article has a surface through which a texture of the woven fabric is visible, and the surface has a 30 cm × 30 cm square region where there is no defective portion that always looks different in color nuance from its surroundings when observed to see light reflected on the surface of the woven fabric under fluorescent lighting.

2.  The fiber reinforced resin molded article according to Claim 1, further comprising a resin film layer stacked with the fiber reinforced resin layer.

3. The fiber reinforced resin molded article according to Claim 1,
further comprising a foamed core layer stacked with the fiber reinforced resin layer.

4. The fiber reinforced resin molded article according to Claim 1,

further comprising a resin film layer stacked with the fiber reinforced resin layer and;
a foamed core layer stacked with the fiber reinforced resin layer.

5. The fiber reinforced resin molded article according to any one of Claims 1 to 4,
wherein the surface has a 30 cm × 30 cm square region where there is no defective portion that always looks different in color nuance from its surroundings when observed under sunlight.

6. The fiber reinforced resin molded article according to any one of Claims 1 to 5, which is an automobile part.

7. A method for manufacturing a fiber reinforced resin molded article comprising:

a step of compression molding a prepreg laminate having a cloth prepreg,
wherein the cloth prepreg is a prepreg formed of a woven fabric made of carbon fiber bundles as a warp and a weft,
the fiber reinforced resin molded article has a surface through which a texture of the woven fabric is visible, and
wherein a loosening rate of weft in the cloth prepreg, which is determined as follows, is 0.0% to 0.2%:

a square fragment having two sides parallel to the warp and two sides perpendicular to the warp, of which the size is 298 mm × 298 mm is cut out from the cloth prepreg, and
the loosening rate of weft is obtained from lengths of the warp and weft taken out from the fragment by the following formula (I):

$$\text{loosening rate of weft} = \{(\text{length of weft} - \text{length of warp}) / \text{length of warp}\} \times 100 \qquad (I).$$

8. The manufacturing method according to Claim 7,
wherein the prepreg laminate further has, as an outermost layer, a resin film layer on at least one surface.

9. The manufacturing method according to Claim 7,
wherein the prepreg laminate has a foamed core layer stacked with the cloth prepreg.

10. The manufacturing method according to any one of Claims 7 to 9,
wherein a fiber basis weight of the woven fabric is 240 g/m$^2$ or more.

11. The manufacturing method according to any one of Claims 7 to 10,
wherein the loosening rate of weft in the cloth prepreg is 0.1% or less, 0.05% or less, or 0.01% or less.

12. The manufacturing method according to any one of Claims 7 to 11,
wherein, a mold a resin flow percentage of which is set to be 0.0% to 0.5% by narrowing a clearance of a share edge is used for the compression molding.

13. The manufacturing method according to any one of Claims 7 to 12, further comprising a step of preparing the cloth prepreg, in which a starting cloth prepreg comprising the woven fabric is prepared, and the starting cloth prepreg is stretched by pulling in a weft direction.

14. The manufacturing method according to Claim 13, wherein, the loosening rate of weft in the starting cloth prepreg is more than 0.2 %.

15. Use of a cloth prepreg in a method for manufacturing the fiber reinforced resin molded article,

wherein the cloth prepreg has a surface through which a texture of a woven fabric made of carbon fiber bundles as a warp and a weft is visible, and a loosening rate of weft, which is determined by a method defined as below, is 0.0% to 0.2%,
wherein the method comprises compression molding a prepreg laminate having one or more cloth prepregs and then,
obtaining a compression molded article having a surface through which a texture of a woven fabric is visible, the loosening rate of weft is obtained by the following method:

a square fragment having two sides parallel to the warp and two sides perpendicular to the warp, of which the size is 298 mm × 298 mm is cut out from the cloth prepreg, and
the loosening rate of weft is obtained from lengths of the warp and weft taken out from the fragment by the following formula (I):

$$\text{loosening rate of weft} = \{(\text{length of weft - length of warp}) / \text{length of warp}\} \times 100 \text{ (I)}.$$

**Patentansprüche**

1. Faserverstärkter Harzformgegenstand, umfassend:

eine faserverstärkte Harzschicht, die ein Gewebe aus Kohlenstofffaserbündeln als Kette und Schuss einschließt, wobei der faserverstärkte Harzformgegenstand ein formgepresster Gegenstand ist,
der faserverstärkte Harzformgegenstand eine Oberfläche aufweist, durch die eine Textur des Gewebes sichtbar ist, und
die Oberfläche einen quadratischen Bereich von 30 cm × 30 cm aufweist, wo es keinen fehlerhaften Abschnitt gibt, der bei Betrachtung zur Wahrnehmung von reflektiertem Licht auf der Oberfläche des Gewebes unter Leuchtstofflampenbeleuchtung in der Farbnuance stets anders aussieht als seine Umgebung.

2. Faserverstärkter Harzformgegenstand gemäß Anspruch 1,
ferner umfassend eine Harzfolienschicht, die mit der faserverstärkten Harzschicht gestapelt ist.

3. Faserverstärkter Harzformgegenstand gemäß Anspruch 1,
ferner umfassend eine geschäumte Kernschicht, die mit der faserverstärkten Harzschicht gestapelt ist.

4. Faserverstärkter Harzformgegenstand gemäß Anspruch 1,

ferner umfassend eine Harzfolienschicht, die mit der faserverstärkten Harzschicht gestapelt ist und eine geschäumte Kernschicht, die mit der faserverstärkten Harzschicht gestapelt ist.

5. Faserverstärkter Harzformgegenstand gemäß einem der Ansprüche 1 bis 4,
wobei die Oberfläche einen quadratischen Bereich von 30 cm × 30 cm aufweist, wo es keinen fehlerhaften Abschnitt gibt, der bei Betrachtung unter Sonnenlicht in der Farbnuance stets anders aussieht als seine Umgebung.

6. Faserverstärkter Harzformgegenstand gemäß einem der Ansprüche 1 bis 5, der ein Automobilteil ist.

7. Verfahren zur Herstellung eines faserverstärkten Harzformgegenstandes, umfassend:

einen Schritt zum Formpressen eines Prepreglaminats mit einem Gewebeprepreg,
wobei das Gewebeprepreg ein Prepreg ist, das aus einem Gewebe aus Kohlenstofffaserbündeln als Kette und Schuss gebildet ist,
der faserverstärkte Harzformgegenstand eine Oberfläche aufweist, durch die eine Textur des Gewebes sichtbar ist, und
wobei eine Schuss-Lockerungsrate in dem Gewebeprepreg, die wie folgt bestimmt wird, 0,0 ö bis 0,2 ö beträgt:

ein quadratisches Fragment mit zwei Seiten, die parallel zur Kette liegen, und zwei Seiten, die senkrecht zur Kette liegen, dessen Größe 298 mm × 298 mm beträgt, wird aus dem Gewebeprepreg herausgeschnitten und

die Schuss-Lockerungsrate wird aus den Längen der Kette und des Schusses, die dem Fragment entnommen werden,
durch die folgende Formel (1) erhalten:

```
Schuss-Lockerungsrate = {(Länge des Schusses – Länge der
Kette)/Länge der Kette} × 100          (I).
```

8. Herstellungsverfahren gemäß Anspruch 7, wobei das Prepreglaminat ferner als eine äußerste Schicht eine Harzfolienschicht auf mindestens einer Oberfläche aufweist.

9. Herstellungsverfahren gemäß Anspruch 7, wobei das Prepreglaminat eine geschäumte Kernschicht aufweist, die mit dem Gewebeprepreg gestapelt ist.

10. Herstellungsverfahren gemäß einem der Ansprüche 7 bis 9,
wobei das Faserflächengewicht des Gewebes 240 g/m$^2$ oder mehr beträgt.

11. Herstellungsverfahren gemäß einem der Ansprüche 7 bis 10,
wobei die Schuss-Lockerungsrate in dem Gewebeprepreg 0,1 ö oder weniger, 0,05 ö oder weniger oder 0,01 ö oder weniger beträgt.

12. Herstellungsverfahren gemäß einem der Ansprüche 7 bis 11,
wobei eine Form, deren Harzfließprozentsatz auf 0,05 % bis 0,5 % durch Verringern eines Abstands einer gemeinsamen Kante eingestellt wird, zum Formpressen verwendet wird.

13. Herstellungsverfahren gemäß einem der Ansprüche 7 bis 12, ferner umfassend einen Schritt zur Herstellung des Gewebeprepregs, in dem ein Ausgangsgewebeprepreg, das das Gewebe umfasst, hergestellt wird und das Ausgangsgewebeprepreg durch Ziehen in einer Schussrichtung gestreckt wird.

14. Herstellungsverfahren gemäß Anspruch 13, wobei die Schuss-Lockerungsrate in dem Ausgangsgewebeprepreg mehr als 0,2 % beträgt.

15. Verwendung eines Gewebeprepregs in einem Verfahren zur Herstellung des faserverstärkten Harzformgegenstands,

wobei das Gewebeprepreg eine Oberfläche aufweist, durch die eine Textur eines Gewebes aus Kohlenstofffaserbündeln als Kette und Schuss sichtbar ist, und eine Schuss-Lockerungsrate, die durch ein nachstehend definiertes Verfahren bestimmt wird, 0,0 % bis 0,2 % beträgt,
wobei das Verfahren das Formpressen eines Prepreglaminats mit einem oder mehreren Gewebeprepregs und dann
das Erhalten eines formgepressten Gegenstands mit einer Oberfläche, durch die eine Textur eines Gewebes sichtbar ist, umfasst, wobei die Schuss-Lockerungsrate durch das folgende Verfahren erhalten wird:

ein quadratisches Fragment mit zwei Seiten, die parallel zur Kette liegen, und zwei Seiten, die senkrecht zur Kette liegen, dessen Größe 298 mm × 298 mm beträgt, wird aus dem Gewebeprepreg herausgeschnitten und
die Schuss-Lockerungsrate wird aus den Längen der Kette und des Schusses, die dem Fragment entnommen werden, durch die folgende Formel (I) erhalten:

```
Schuss-Lockerungsrate = {(Länge des Schusses – Länge der
Kette)/Länge der Kette} × 100          (I).
```

**Revendications**

1. Article moulé en résine renforcée par des fibres comprenant :

une couche de résine renforcée par des fibres incluant un tissu constitué de faisceaux de fibres de carbone comme chaîne et trame,

dans lequel l'article moulé en résine renforcée par des fibres est un article moulé par compression,

l'article moulé en résine renforcée par des fibres possède une surface à travers laquelle une texture du tissu est visible, et

la surface possède une région carrée de 30 cm × 30 cm dans laquelle il n'y a aucune partie défectueuse dont la nuance de couleur semble toujours différente de celle de son environnement lorsqu'elle est observée pour voir la lumière réfléchie sur la surface du tissu sous un éclairage fluorescent.

2. Article moulé en résine renforcée par des fibres selon la revendication 1,
comprenant en outre une couche de film de résine empilée avec la couche de résine renforcée par des fibres.

3. Article moulé en résine renforcée par des fibres selon la revendication 1,
comprenant en outre une couche centrale en mousse empilée avec la couche de résine renforcée par des fibres.

4. Article moulé en résine renforcée par des fibres selon la revendication 1,

comprenant en outre une couche de film de résine empilée avec la couche de résine renforcée par des fibres et ;
une couche centrale en mousse empilée avec la couche de résine renforcée par des fibres.

5. Article moulé en résine renforcée par des fibres selon l'une quelconque des revendications 1 à 4,
dans lequel la surface possède une région carrée de 30 cm × 30 cm dans laquelle il n'y a aucune partie défectueuse dont la nuance de couleur semble toujours différente de celle de son environnement lorsqu'elle est observée à la lumière du soleil.

6. Article moulé en résine renforcée par des fibres selon l'une quelconque des revendications 1 à 5, qui est une pièce automobile.

7. Procédé de fabrication d'un article moulé en résine renforcée par des fibres comprenant :

une étape de moulage par compression d'un stratifié préimprégné ayant un préimprégné en tissu,
dans lequel le préimprégné en tissu est un préimprégné formé d'un tissu constitué de faisceaux de fibres de carbone comme chaîne et trame,
l'article moulé en résine renforcée par des fibres possède une surface à travers laquelle une texture du tissu est visible, et
dans lequel un taux de relâchement de la trame dans le préimprégné en tissu, qui est déterminé comme suit, est de 0,0 % à 0,2 % :

un fragment carré ayant deux côtés parallèles à la chaîne et deux côtés perpendiculaires à la chaîne, dont la taille est de 298 mm × 298 mm, est découpé dans le préimprégné en tissu, et
le taux de relâchement de la trame est obtenu à partir de longueurs de la chaîne et de la trame extraites du fragment par la formule (I) suivante :

taux de relâchement de la trame = {(longueur de trame - longueur de chaîne) / longueur de chaîne} × 100         (I).

8. Procédé de fabrication selon la revendication 7,
dans lequel le stratifié préimprégné a en outre, en tant que couche la plus externe, une couche de film de résine sur au moins une surface.

9. Procédé de fabrication selon la revendication 7,
dans lequel le stratifié préimprégné possède une couche centrale en mousse empilée avec le préimprégné en tissu.

10. Procédé de fabrication selon l'une quelconque des revendications 7 à 9,
dans lequel un grammage des fibres du tissu est de 240 g/m$^2$ ou plus.

11. Procédé de fabrication selon l'une quelconque des revendications 7 à 10,

dans lequel le taux de relâchement de la trame dans le tissu préimprégné est de 0,1 % ou moins, de 0,05 % ou moins, ou de 0,01 % ou moins.

12. Procédé de fabrication selon l'une quelconque des revendications 7 à 11, dans lequel un moule dont un pourcentage d'écoulement de résine est fixé à 0,0 % à 0,5 % en réduisant un jeu d'un bord commun est utilisé pour le moulage par compression.

13. Procédé de fabrication selon l'une quelconque des revendications 7 à 12, comprenant en outre une étape de préparation du préimprégné en tissu, dans lequel un préimprégné en tissu de départ comprenant le tissu est préparé, et le préimprégné en tissu de départ est étiré par traction dans le sens de la trame.

14. Procédé de fabrication selon la revendication 13, dans lequel le taux de relâchement de la trame dans le préimprégné en tissu de départ est supérieur à 0,2 %.

15. Utilisation d'un préimprégné en tissu dans un procédé de fabrication de l'article moulé en résine renforcée par des fibres,

dans laquelle le préimprégné en tissu possède une surface à travers laquelle une texture d'un tissu constitué de faisceaux de fibres de carbone comme chaîne et trame est visible, et un taux de relâchement de la trame, qui est déterminé par un procédé défini comme ci-dessous, est de 0,0 % à 0,2 %, dans laquelle le procédé comprend le moulage par compression d'un stratifié préimprégné ayant un ou plusieurs préimprégnés en tissu, et ensuite l'obtention d'un article moulé par compression ayant une surface à travers laquelle une texture d'un tissu est visible, le taux de relâchement de la trame est obtenu par le procédé suivant :

un fragment carré ayant deux côtés parallèles à la chaîne et deux côtés perpendiculaires à la chaîne, dont la taille est de 298 mm × 298 mm, est découpé dans le préimprégné en tissu, et le taux de relâchement de la trame est obtenu à partir de longueurs de chaîne et de trame extraites du fragment par la formule (I) suivante :

taux de relâchement de la trame = {(longueur de trame - longueur de chaîne) / longueur de chaîne} × 100    (I).

# FIG. 1

# FIG. 2

# FIG. 3

# FIG. 4

# FIG. 5

# FIG. 6

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017007012 A

- EP 3095577 A1